# EUROPEAN PATENT APPLICATION

(11) **EP 4 637 182 A1**
(43) Date of publication of application: **22.10.2025**
(21) Application number: 23903277.4
(22) Date of filing: 29.11.2023
(51) Int. Cl.: H04R 3/02

(54) **SPEECH PROCESSING SYSTEM, SPEECH PROCESSING METHOD, AND PROGRAM**

(30) Priority: 12.12.2022 JP 2022198122
(71) Applicant: Panasonic Intellectual Property Management Co., Ltd., Kadoma-shi, Osaka 571-0057 (JP)
(72) Inventor: YOKOTA, Kenji, Kadoma-shi, Osaka 571-0057 (JP); OKAZAKI, Takayosi, Kadoma-shi, Osaka 571-0057 (JP)
(74) Representative: Novagraaf International SA
(86) International application number: PCT/JP2023/042673
(87) International publication number: WO 2024/127986

(57) **Abstract**

An audio processing system (1) includes a first input I/F (10); a second input I/F (11); and a processor (12). The first input I/F (10) obtains a first voice signal (Sig1) via a communication line. The second input I/F (11) obtains a second voice signal (Sig2) based on a voice collected by a microphone (2). The processor (12) outputs an output voice signal (Sig3) based on the first voice signal (Sig1) and the second voice signal (Sig2) to a loudspeaker (3). The processor (12) causes the output voice signal (Sig3) to include a signal obtained by reducing a component corresponding to the first voice signal (Sig1), when a first condition and a second condition are met. The first condition is that both the first voice signal (Sig1) and the second voice signal (Sig2) include a voice signal based on a voice uttered by the same person. The second condition is that the second voice signal (Sig2) is clear.

## Description

### [Technical Field]

The present disclosure relates to an audio processing system, and so on, for processing a sound emitted from a loudspeaker.

### [Background Art]

For example, Patent Literature (PTL) 1 discloses a sound communication terminal. This sound communication terminal is a device that controls a sound output from at least one of a plurality of terminals belonging to a multipoint sound communication system and includes a sound location determiner and a conversation partner manager. The sound location determiner sets the location of the sound source when a sound is output from another terminal. The conversation partner manager detects an utterer and a conversation partner out of the plurality of terminals, and detects a conversation group based on the combination of the detected utterer and conversation partner. The sound location determiner changes the settings of the location of the sound source in accordance with a change in the detected conversation group.

### [Citation List]

### [Patent Literature]

[PTL 1] Japanese Unexamined Patent Application Publication No. 2012-108587

### [Summary of Invention]

### [Technical Problem]

The present disclosure provides an audio processing system, and so on, which impair less comfort of conversation, even when there are a plurality of users at the same point.

### [Solution to Problem]

An audio processing system according to an aspect of the present disclosure includes a first input interface; a second input interface; and a signal processing circuit. The first input interface obtains a first voice signal via a communication line. The second input interface obtains a second voice signal based on a voice collected by a microphone. The signal processing circuit outputs an output voice signal based on the first voice signal and the second voice signal to a loudspeaker. The signal processing circuit causes the output voice signal to include a signal obtained by reducing a component corresponding to the first voice signal, when both a first condition and a second condition are met, the first condition being that both the first voice signal and the second voice signal include a voice signal based on a voice uttered by the same person, the second condition being that the second voice signal is clear.

An audio processing method according to an aspect of the present disclosure includes: obtaining a first voice signal via a communication line. The audio processing method includes obtaining a second voice signal based on a voice collected by a microphone. The audio processing method includes outputting, to a loudspeaker, an output voice signal including a signal obtained by reducing a component corresponding to the first voice signal, when both a first condition and a second condition are met, the first condition being that both the first voice signal and the second voice signal include a voice signal based on a voice uttered by the same person, the second condition being that the second voice signal is clear.

A program according to an aspect of the present disclosure causes one or more processors to execute the audio processing method described above.

### [Advantageous Effects of Invention]

An audio processing system, and so on, according to the present disclosure are advantageous in impairing less comfort of conversation, if both an offline conversation and an online conversation are mixed.

### [Brief Description of Drawings]

[FIG. 1]

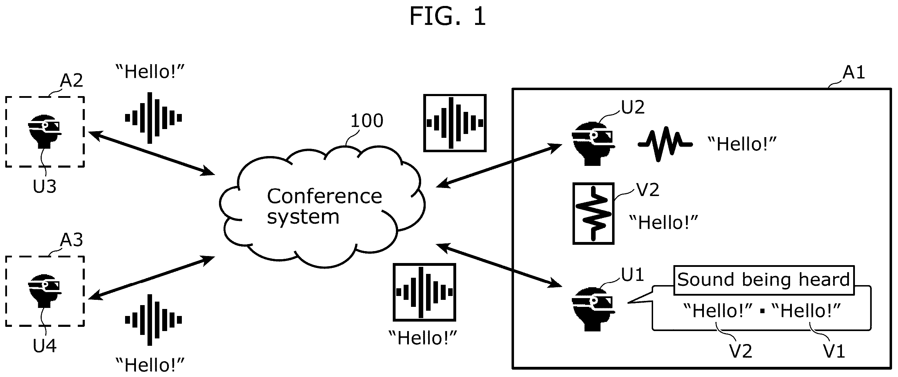

   FIG. 1 illustrates problems in communications using a conference system.
[FIG. 2]

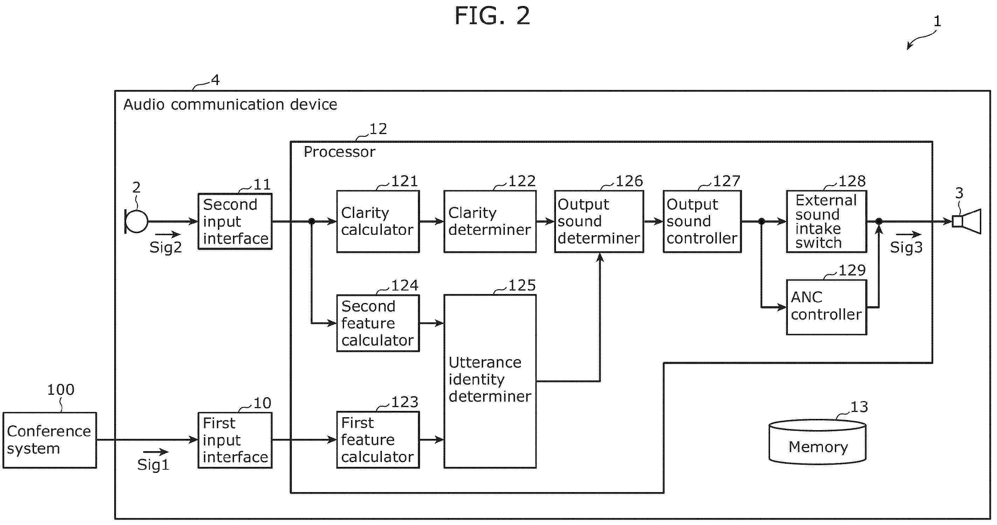

   FIG. 2 is a block diagram showing an example overall configuration including an audio processing system according to an embodiment.
[FIG. 3]

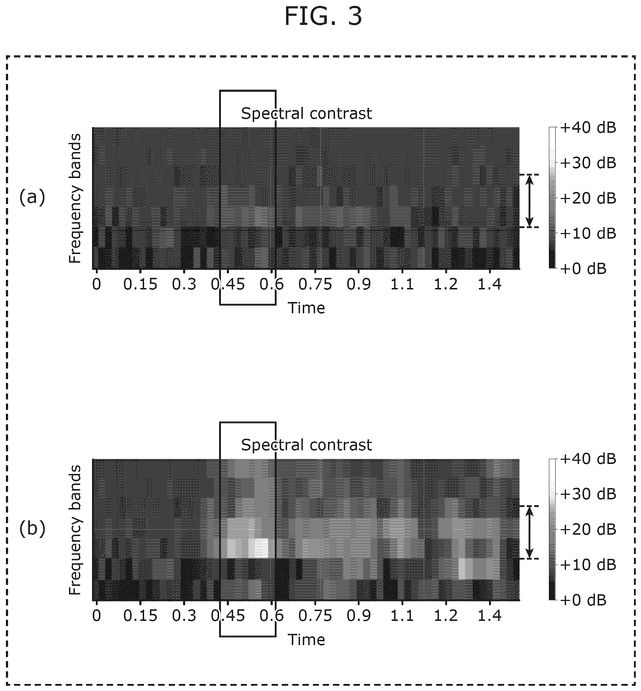

   FIG. 3 illustrates a first determination operation for determining the clarity of a second voice signal.
[FIG. 4]

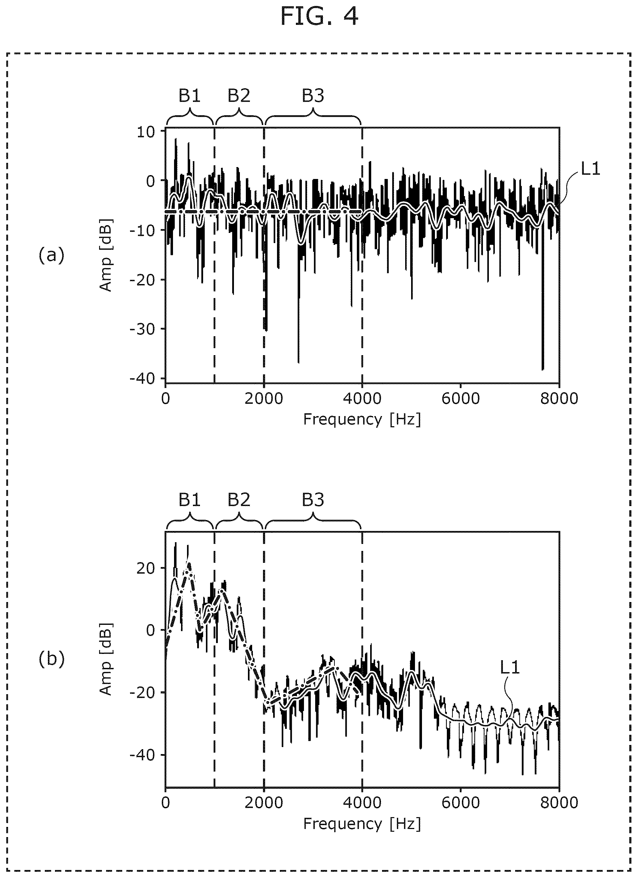

   FIG. 4 illustrates a second determination operation for determining the clarity of the second voice signal.
[FIG. 5]

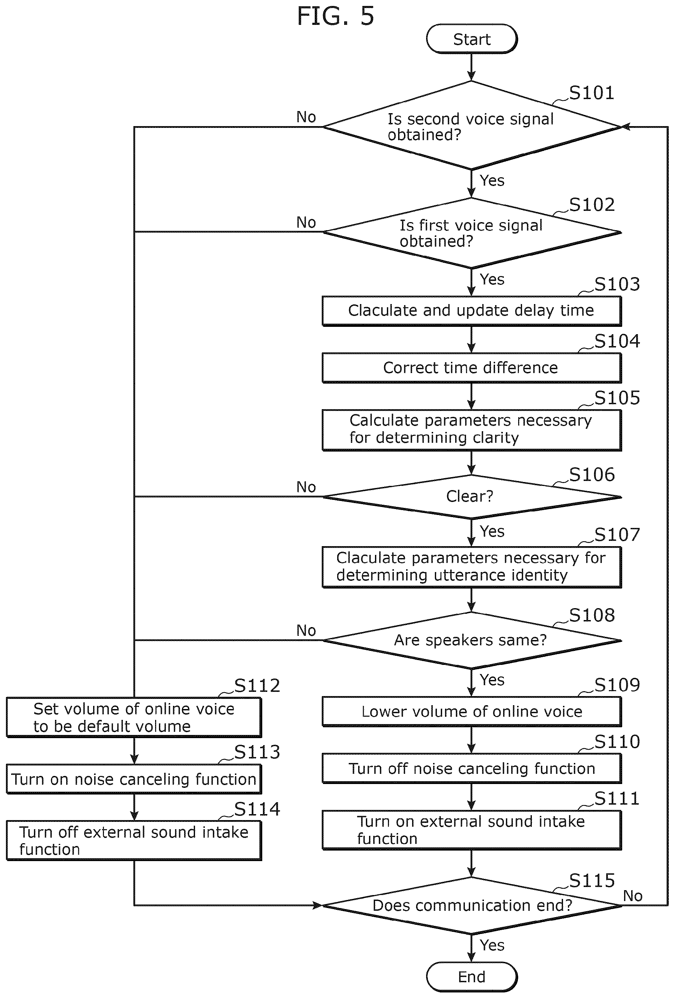

   FIG. 5 is a flowchart showing an example operation of the audio processing system according to the embodiment.
[FIG. 6]

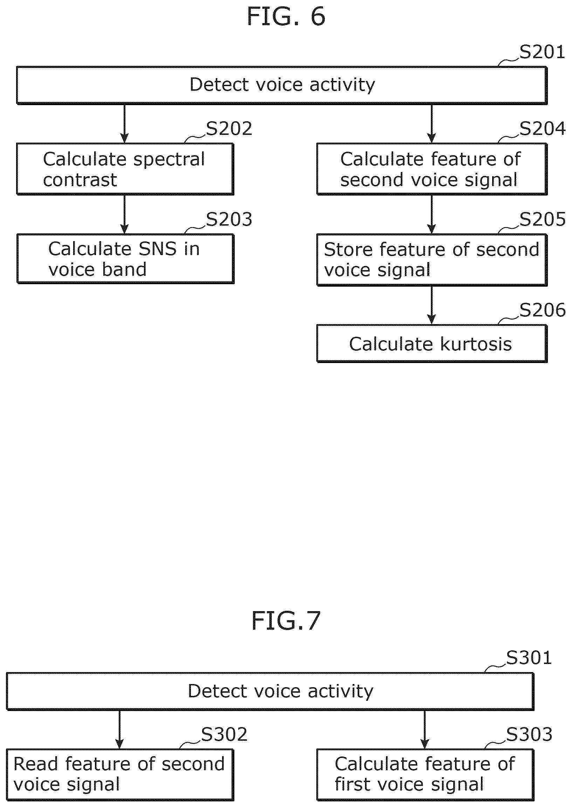

   FIG. 6 is a flowchart showing example calculation of parameters necessary for determining the clarity of the second voice signal.
[FIG. 7]
   FIG. 7 is a flowchart showing example calculation of parameters necessary for determining utterance identity.
[FIG. 8]

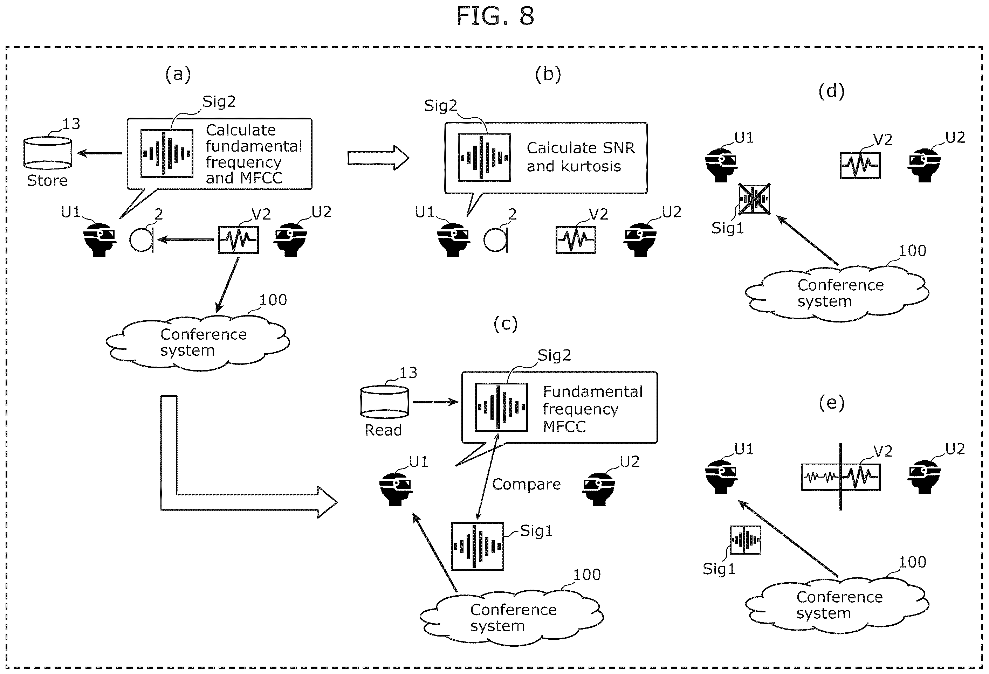

   FIG. 8 illustrates an outline of the example operation of the audio processing system according to the embodiment.
[FIG. 9]

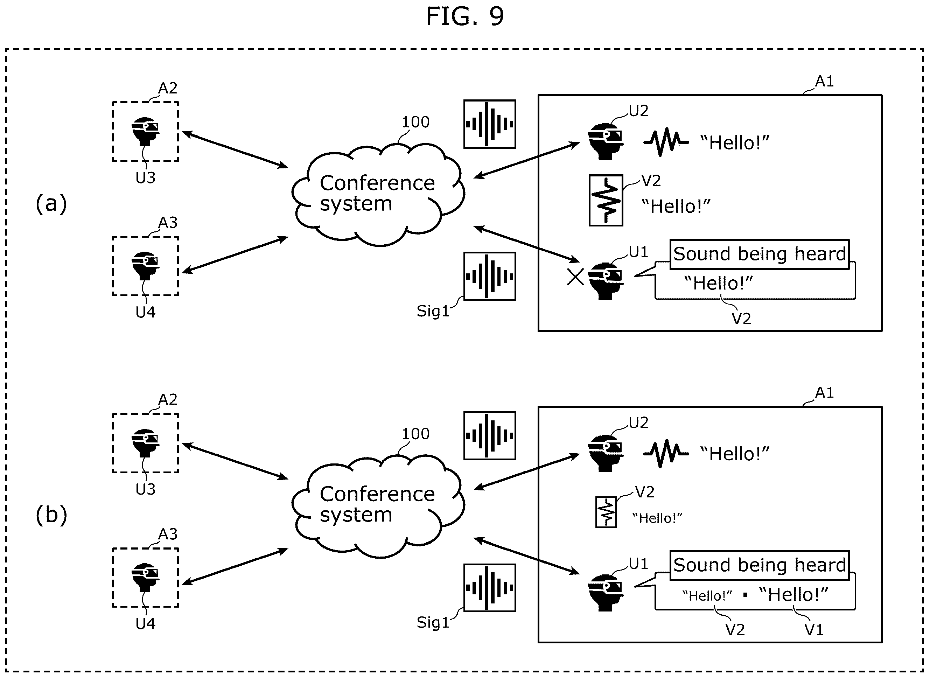

   FIG. 9 illustrates advantages of the audio processing system according to the embodiment.

### [Description of Embodiment]

### [1. Underlying Knowledge Forming Basis of the Present Disclosure]

First, the perspective view of the inventors will be described.

Typically known is a technique for communications, such as a conference, among a plurality of points at the same time using a conference system via a multipoint control unit (MCU) or an online conference service, such as Zoom (registered trademark). In such a communication, each participant has a conversation with the other participants, while wearing a device (e.g., a headset) with a microphone and a loudspeaker. In recent years, each participant can have a conversation with the other participants in the same virtual space or in sight of the same virtual space, while wearing a device (e.g., a head mount display or smart glasses) using the x-reality (XR) technologies. In such a communication, there may be a plurality of participants at the same point, which arises the following problems.

FIG. 1 illustrates problems in communications using a conference system. In FIG. 1, conference system 100 is a conference system via the MCU described above or a server provided by an online conference service. The example in FIG. 1 shows that two users U1 and U2 at first point A1, user U3 at second point A2, and user U4 at third point A3 have an online conference using conference system 100. A voice based on a voice signal transmitted via conference system 100 is output from a loudspeaker so that each of users U1 to U4 can hear the voice uttered by another user. As an example, when user U1 utters the voice saying "Hello!", the voice based on a voice signal transmitted via conference system 100 is output from the loudspeaker so that other users U2, U3, and U4 can hear the voice saying "Hello!" uttered by user U1.

In the example in FIG. 1, two users U1 and U2 are at first point A1. Accordingly, at first point A1, a voice uttered by one of two users U1 and U2 can be directly heard by the other user without via conference system 100. In this case, for example, when user U2 at first point A1 utters voice V2 saying "Hello!", user U1 directly hears voice V2 uttered by user U2, and voice V1 uttered by user U2 and transmitted via conference system 100.

As described above, there are a plurality of users at the same point. The user at this point hears both the direct voice from the other user at this point and the voice via conference system 100 and thus has a difficulty in hearing the voice uttered by the other user. In addition, the voice from the other user at this point via conference system 100 reaches the ears of the user with a delay from the direct voice from the other user. Accordingly, the voice from the other user via conference system 100 reaches the ears of the user when the user who has heard the direct voice from the other user tries to say some words. This hinders the utterance of the user who has difficulty in talking. In this manner, the comfort of conversation is likely to be impaired, when there are a plurality of users at the same point.

From the foregoing, the present inventors have conceived of the present disclosure.

Now, an embodiment will be described in detail with reference to the drawings. The embodiment described below is a mere general or specific example of the present disclosure. The numerical values, shapes, materials, elements, the arrangement and connection of the elements, steps, step orders etc. shown in the following embodiment are thus mere examples, and are not intended to limit the scope of the present disclosure. Among the elements in the following embodiment, those not recited in the independent claims will be described as optional.

The figures are schematic representations and not necessarily drawn strictly to scale. The same reference signs represent substantially the same configurations in the drawings and redundant description will be omitted or simplified.

### [Embodiment]

### [2. Configuration]

### [2-1. Overall Configuration]

First, an overall configuration including an audio processing system according to the embodiment will be described with reference to FIG. 2. FIG. 2 is a block diagram showing an example overall configuration including the audio processing system according to the embodiment. Audio processing system 1 is for causing loudspeaker 3 to output a voice based on a voice signal upon obtainment of the voice signal from outside. In this embodiment, audio processing system 1 is audio communication device 4.

Audio communication device 4 is communicable with conference system 100 via a network, such as the Internet. Note that audio communication device 4 can communicate with conference system 100 via a local area network (LAN).

Audio communication device 4 is attached to the head or neck of the user and is divided into a closed-type audio communication device, an open-type audio communication device, and an audio communication device switchable between the closed and open types. The closed-type audio communication device covers the earholes (i.e., eardrums) of the user, and includes an earphone headset or a headphone headset, for example. The open-type audio communication device does not cover the earholes, and includes a neck speaker or a goggle-type wearable device for XR, for example. The audio communication device switchable between the closed and open types is switchable between the function of covering the earholes of the user and the function of not covering the earholes of the user. The audio communication device includes an earphone headset or a headphone headset switchable by opening and closing plates of a housing, for example. Note that audio communication device 4 may include a body for executing audio or other processing and a headset including a microphone and a loudspeaker, which are integral or separated.

Audio processing system 1 is applicable to any of a closed-type audio communication device, an open-type audio communication device, and an audio communication device switchable between the closed and open types. Now, an example will be described, where audio communication device 4 is a closed-type audio communication device.

As already described, conference system 100 is, for example, a conference system via the MCU or a server provided by an online conference service. Upon receipt of a voice signal output from audio communication device 4 worn by a certain user, conference system 100 executes correction processing on the received voice signal as appropriate and transmits corrected voice signal to one or more audio communication devices 4 worn by other one or more users. The correction processing may include noise reduction processing for reducing noise contained in the received voice signal, for example. The correction processing may also include frequency correction processing of emphasizing the frequency band of the received voice signal that is hearable by human, for example. Note that conference system 100 does not necessarily execute the correction processing on the received voice signal.

### [2-2. Configuration of Audio Communication Device (Audio Processing System)]

Next, a configuration of audio communication device 4 (i.e., audio processing system 1) will be described in detail. As shown in FIG. 2, audio communication device 4 includes microphone 2, first input interface (hereinafter referred to as "first input I/F") 10, a second input interface (hereinafter referred to as "second input I/F") 11, processor 12, memory 13, and loudspeaker 3.

Microphone 2 is a sound collection device that obtains a sound around audio communication device 4 and outputs second voice signal Sig2 based on the obtained sound. Specifically, microphone 2 is a condenser microphone, a dynamic microphone, or a micro electro mechanical system (MEMS) microphone, for example, but is not particularly limited. The microphone may be non-directional or directional.

Loudspeaker 3 outputs a voice based on output voice signal Sig3 output from processor 12. Loudspeaker 3 emits sound waves toward the earholes of the user wearing audio communication device 4 but may be a bone conduction speaker, for example.

First input I/F 10 is, for example, a wireless communication interface that communicates with conference system 100 via a network under a wireless communication protocol, such as Wi-Fi (registered trademark). Accordingly, first input I/F 10 receives first voice signal Sig1 transmitted from conference system 100. In other words, first input I/F 10 obtains first voice signal Sig1 via a communication line. First voice signal Sig1 is mainly based on a voice uttered by another user. First input I/F 10 outputs obtained first voice signal Sig1 to processor 12.

Second input I/F 11 is an interface that receives second voice signal Sig2 output from microphone 2. In other words, second input I/F 11 obtains second voice signal Sig2 based on a voice collected by microphone 2. Second input I/F 11 outputs obtained second voice signal Sig2 to processor 12.

Processor 12 is a central processing unit (CPU) or a digital signal processor (DSP), for example. Processor 12 performs information processing of outputting output voice signal Sig3, based on first voice signal Sig1 obtained by first input I/F 10 and second voice signal Sig2 obtained by second input I/F 11 to loudspeaker 3. The information processing described above is achieved by processor 12 executing the computer programs stored in memory 13. Processor 12 is an example of the signal processing circuit of audio processing system 1.

Processor 12 includes clarity calculator 121, clarity determiner 122, first feature calculator 123, second feature calculator 124, utterance identity determiner 125, output sound determiner 126, output sound controller 127, external sound intake switch 128, and active noise cancelling (ANC) controller 129 as functional elements. The functions described above are achieved by, for example, processor 12 executing the computer programs stored in memory 13.

Clarity calculator 121 calculates the feature of second voice signal Sig2 used when clarity determiner 122 determines whether second voice signal Sig2 is clear. The expression "second voice signal Sig2 is clear" here means that the signal to noise ratio (SNR) of the frequency band (hereinafter referred to as a "voice band") corresponding to human voice indicated by second voice signal Sig2 is higher than a threshold, and the characteristics of the human voice are clear. In other words, the expression "second voice signal Sig2 is clear" means that a person who hears a voice based on second voice signal Sig2 output from loudspeaker 3 can understand what is said.

Clarity calculator 121 calculates the SNR and the spectral envelope of second voice signal Sig2 as the feature of second voice signal Sig2. Specifically, clarity calculator 121 performs signal processing on second voice signal Sig2 as appropriate to calculate the spectral contrast of second voice signal Sig2. Clarity calculator 121 then calculates the SNR in the voice band of second voice signal Sig2, based on the calculated spectral contrast. Clarity calculator 121 also calculates a mel-frequency cepstral coefficient (MFCC) of second voice signal Sig2. The MFCC is a coefficient of the kepstrum used as a feature in sound recognition, for example, and is obtained by converting the power spectrum compressed using a mel-filter bank to a logarithmic power spectrum and applying the inverse discrete cosine transform to the logarithmic power spectrum. The MFCC corresponds to the spectral envelope.

Clarity determiner 122 determines whether the second condition that second voice signal Sig2 is clear is met, using the feature of second voice signal Sig2 calculated by clarity calculator 121. The determination operation by clarity determiner 122 will be described later in detail at the item [2-3. Clarity Determination].

First feature calculator 123 calculates the feature of first voice signal Sig1 used when utterance identity determiner 125 determines whether first voice signal Sig1 and second voice signal Sig2 are based on the voice uttered by the same person. First feature calculator 123 calculates the fundamental frequency of first voice signal Sig1 and the spectral envelope of first voice signal Sig1 as the feature of first voice signal Sig1. Specifically, first feature calculator 123 calculates the cepstrum of first voice signal Sig1, and calculates the fundamental frequency of first voice signal Sig1 from the calculated cepstrum. The cepstrum is obtained as follows. The power spectrum of first voice signal Sig1 is calculated by applying the Fourier transform. The calculated power spectrum is converted to a logarithmic power spectrum and the Fourier transform is further applied to the logarithmic power spectrum. In addition, first feature calculator 123 calculates the MFCC of first voice signal Sig1 to calculate the spectral envelope. First feature calculator 123 also calculates the time when a vowel appears in first voice signal Sig1 from the calculated spectral envelope.

Second feature calculator 124 calculates the feature of second voice signal Sig2 used when utterance identity determiner 125 determines whether first voice signal Sig1 and second voice signal Sig2 are based on the voice uttered by the same person. Second feature calculator 124 calculates the fundamental frequency of second voice signal Sig2 and the spectral envelope of second voice signal Sig2 as the feature of second voice signal Sig2. Specifically, second feature calculator 124 calculates the cepstrum of second voice signal Sig2 to calculate the fundamental frequency of second voice signal Sig2 from the calculated cepstrum. In addition, second feature calculator 124 calculates the MFCC of second voice signal Sig2 to calculate the spectral envelope. Second feature calculator 124 also calculates the time when a vowel appears in second voice signal Sig2 from the calculated spectral envelope.

The spectral envelope of second voice signal Sig2 may be calculated by only one of clarity calculator 121 and second feature calculator 124. In this embodiment, the spectral envelope of second voice signal Sig2 will be described as being calculated by second feature calculator 124. Accordingly, clarity calculator 121 does not necessarily calculate the spectral envelope of second voice signal Sig2. If only one of clarity calculator 121 and second feature calculator 124 calculates the spectral envelope of second voice signal Sig2, the calculated spectral envelope is shared with the other.

Utterance identity determiner 125 determines whether the first condition is met using the feature of first voice signal Sig1 calculated by first feature calculator 123 and the feature of second voice signal Sig2 calculated by second feature calculator 124. The first condition is that first voice signal Sig1 and second voice signal Sig2 include a voice signal based on the voice uttered by the same person. In this embodiment, utterance identity determiner 125 determines that the first condition is met where the following conditions are met. (i) First voice signal Sig1 and second voice signal Sig2 have the same fundamental frequency. (ii) A vowel in first voice signal Sig1 and a vowel in second voice signal Sig2 appear at the same time and are of the same type. On the other hand, utterance identity determiner 125 determines that the first condition is not met when at least one of (i) or (ii) described above is not met.

The time when the vowel appears in each voice signal can be detected from the spectral envelope of the voice signal. Passing through the communication line, first voice signal Sig1 is obtained by first input I/F 10 with a delay from second voice signal Sig2. Accordingly, utterance identity determiner 125 makes a determination on (ii) in view of the delay.

In this manner, processor 12 (i.e., utterance identity determiner 125) determines whether the first condition is met based on the correlation between a component corresponding to the vowel in first voice signal Sig1 and a component corresponding to the vowel in second voice signal Sig2. Specifically, utterance identity determiner 125 determines that the first condition is met, when the following conditions are met. (i) The difference between the fundamental frequency of first voice signal Sig1 and the fundamental frequency of second voice signal Sig2 is calculated. The calculated difference is lower than or equal to a threshold. (ii) The difference between the time when the vowel appears in first voice signal Sig1 and the time when the vowel appears in second voice signal Sig2 is calculated. The calculated difference is lower than or equal to a threshold, and the vowel that appears in first voice signal Sig1 and the vowel that appears in second voice signal Sig2 are of the same type. On the other hand, utterance identity determiner 125 determines that the first condition is not met, when the calculated difference is higher than the threshold in (i) or (ii). In the determination on (ii), utterance identity determiner 125 may calculate the correlation coefficient between the spectral envelope calculated in first voice signal Sig1 and the spectral envelope calculated in second voice signal Sig2. Utterance identity determiner 125 may then determines whether the calculated correlation coefficient is lower than or equal to a threshold. In the determination on (ii), utterance identity determiner 125 may determine that (ii) is met when one of the conditions is met.

Note that utterance identity determiner 125 may determine whether the first condition is met only based on whether (i) is met, or may determine whether the first condition is met only based on whether (ii) is met. Alternatively, utterance identity determiner 125 may determine that the first condition is met when at least one of (i) or (ii) is met, and may determine that the first condition is not met when neither (i) nor (ii) is met.

Instead of (ii), utterance identity determiner 125 may determine whether vowels appear sequentially in first voice signal Sig1 and vowels appear sequentially in second voice signal Sig2 in the same pattern. In this case, utterance identity determiner 125 does not necessarily take the delay described above into consideration.

Here the following method based on the similarity between the waveform of first voice signal Sig1 and the waveform of second voice signal Sig2 is also conceivable. When the similarity between the waveforms is higher than or equal to a threshold, the first condition is determined to be met. When the similarity between the waveforms is lower than the threshold, the first condition is determined not to be met. The "waveform" here is the waveform of the amplitude of each signal, that is, the waveform of the sound pressure level. However, as described above, since first voice signal Sig1 is subjected to the correction processing in conference system 100, the waveform of first voice signal Sig1 and the waveform of second voice signal Sig2 are different. Accordingly, utterance identity determiner 125 determines whether the first condition is met by a method different from the method based on the similarity between the waveforms as described above.

In conference system 100, if first voice signal Sig1 is not subjected to the correction processing, utterance identity determiner 125 may determine whether the first condition is met based on the similarity between the waveforms. For example, utterance identity determiner 125 may determine whether the first condition is met based on whether the sound level in first voice signal Sig1 and the sound level in second voice signal Sig2 change almost identically. In other words, utterance identity determiner 125 may make the determination based on the correlation between the amplitude envelope of first voice signal Sig1 and the amplitude envelope of second voice signal Sig2.

Output sound determiner 126 determines which of the first state and the second state the current state is, based on the determination by clarity determiner 122 as to whether second condition is met and the determination by utterance identity determiner 125 as to whether the first condition is met. In the first state, the user is relatively close to another user and can hear the voice uttered by the other user directly and clearly. The second state correspond to the state other than the first state. For example, the second state includes the state where the user is relatively far from another user and has difficulty in hearing the voice uttered by the other user directly. When both the first condition and the second condition are met, output sound determiner 126 determines that the current state is the first state. On the other hand, when at least one of the first condition or the second condition is not met, output sound determiner 126 determines that the current state is the second state.

Output sound controller 127 controls a voice signal to be included in output voice signal Sig3, based on the result of determination by output sound determiner 126. Specifically, when output sound determiner 126 determines that the current state is the first state, output sound controller 127 performs the control of lowering the volume of a voice based on first voice signal Sig1 output from loudspeaker 3. The expression "lowering the volume of a voice based on first voice signal Sig1" means setting the volume of the voice based on first voice signal Sig1 to be lower than the volume (i.e., the default volume) of the voice based on first voice signal Sig1 in the second state. In addition, output sound controller 127 causes external sound intake switch 128 to turn on an external sound intake function, and causes ANC controller 129 to turn off a noise cancelling function.

That is, when both the first condition and the second condition are met, processor 12 (i.e., output sound controller 127) causes output voice signal Sig3 to include a signal obtained by reducing the component corresponding to first voice signal Sig1. While in this embodiment, processor 12 reduces the component corresponding to first voice signal Sig1 by lowering the volume of the voice based on first voice signal Sig1, how to reduce the component is not limited thereto. For example, when both the first condition and the second condition are met, processor 12 does not necessarily cause output voice signal Sig3 to include first voice signal Sig1. For example, when both the first condition and the second condition are met, processor 12 may execute suppression processing on first voice signal Sig1, based on second voice signal Sig2 and cause output voice signal Sig3 to include processed first voice signal Sig1.

When both the first condition and the second condition are met, processor 12 (i.e., output sound controller 127) turns on the external sound intake function, that is, causes output voice signal Sig3 to include second voice signal Sig2. Note that second voice signal Sig2 to be included in output voice signal Sig3 may be subjected to audio processing, such as noise reduction processing or equalizing processing.

On the other hand, when output sound determiner 126 determines that the current state is the second state, output sound controller 127 performs the control of setting the volume of the voice based on first voice signal Sig1 output from loudspeaker 3 to the default volume. In addition, output sound controller 127 causes external sound intake switch 128 to turn off the external sound intake function and causes ANC controller 129 to turn on the noise cancelling function.

That is, when at least one of the first condition or the second condition is not met, processor 12 (i.e., output sound controller 127) causes output voice signal Sig3 to include first voice signal Sig1, and turns off the external sound intake function, that is, not to cause output voice signal Sig3 to include second voice signal Sig2. Note that first voice signal Sig1 to be included in output voice signal Sig3 may be subjected to audio processing, such as noise reduction processing or equalizing processing.

When at least one of the first condition or the second condition is not met, processor 12 (i.e., output sound controller 127) turns on the noise cancelling function, that is, causes output voice signal Sig3 to further include a voice signal in an opposite phase to second voice signal Sig2.

External sound intake switch 128 is caused, by output sound controller 127, to switch the on and off of the external sound intake function of taking in the sound around the user. When the external sound intake function is on, loudspeaker 3 outputs a voice based on output voice signal Sig3 including second voice signal Sig2. On the other hand, when the external sound intake function is off, loudspeaker 3 outputs a voice based on output voice signal Sig3 including no second voice signal Sig2.

ANC controller 129 is caused, by output sound controller 127, to switch the on and off of the noise cancelling function. When the noise cancelling function is on, ANC controller 129 generates a voice signal in the opposite phase to second voice signal Sig2 and causes output voice signal Sig3 to include the generated voice signal. In this case, loudspeaker 3 outputs a voice based on the voice signal in the opposite phase to second voice signal Sig2. Accordingly, the voice as the basis of second voice signal Sig2 and the voice based on the voice signal in the opposite phase to second voice signal Sig2 cancel each other around the ears of the user. The user can hear almost none of these voices. On the other hand, when noise cancelling function is off, ANC controller 129 generates no voice signal in the opposite phase to second voice signal Sig2.

Memory 13 is a storage device that stores information necessary for processor 12 executing computer programs and executing various functions. Memory 13 is a semiconductor memory, for example. Note that memory 13 is not necessarily a memory to be attached to processor 12 but may be a memory built in processor 12.

### [2-3. Clarity Determination]

Now, a determination operation by clarity determiner 122 as to whether second voice signal Sig2 is clear will be described in detail. In this embodiment, clarity determiner 122 executes a first determination operation and a second determination operation. When determining that the signal is clear in both the determination operations, clarity determiner 122 determines that second voice signal Sig2 is clear, that is, the second condition is met. On the other hand, when determining the signal is unclear in at least one of the first determination operation or the second determination operation, clarity determiner 122 determines that second voice signal Sig2 is unclear, that is, the second condition is not met.

FIG. 3 illustrates the first determination operation for determining the clarity of second voice signal Sig2. FIG. 3 shows the spectral contrast of second voice signal Sig2. In FIG. 3, the vertical axis represents the frequency band of second voice signal Sig2, and the horizontal axis represents the time (in the unit of seconds). In FIG. 3, the light and darkness represents the SNR. The lighter the color, the higher the SNR. The darker the color, the lower the SNR.

In the first determination operation, clarity determiner 122 compares the SNR in the voice band of second voice signal Sig2 to a threshold in a voice activity (i.e., the period surrounded by the rectangular frame in FIG. 3, e.g., the period for a tenth-of-second). In the first determination operation, clarity determiner 122 determines that second voice signal Sig2 is clear when the SNR is higher than the threshold, and determines that second voice signal Sig2 is unclear when the SNR is lower than the threshold.

Here, the SNR in the voice band of a voice signal can be calculated as the representative value of the SNR in each frequency band included in the voice band of the voice signal, for example. The representative value is, for example, the mean, the median, the maximum, or the mode. The SNR in the voice band of a voice signal can be calculated as the ratio of the representative value of the SNR in each frequency band in the voice band and the representative value of the SNR in each frequency band out of the voice band, for example. The latter allows clarity determiner 122 to determine whether second voice signal Sig2 is clear, even when the periphery of the user is relatively noisy due to a large operation sound of a ventilator, for example, and the SNR is relatively high in each frequency band.

In FIG. 3, (a) shows that the SNR is lower than the threshold in the voice band (i.e., the band indicated by the bidirectional arrow in (a) of FIG. 3) of second voice signal Sig2 in the voice activity surrounded by the rectangular frame. Accordingly, in the example in (a) of FIG. 3, clarity determiner 122 determines in the first determination operation that second voice signal Sig2 is unclear.

On the other hand, in FIG. 3, (b) shows that the SNR is higher than the threshold in the voice band of second voice signal Sig2 (i.e., the band indicated by the bidirectional arrow in (b) of FIG. 3) in the voice activity surrounded by the rectangular frame. Accordingly, in the example in (b) of FIG. 3, clarity determiner 122 determines in the first determination operation that second voice signal Sig2 is clear.

FIG. 4 illustrates the second determination operation for determining the clarity of second voice signal Sig2. FIG. 4 shows the spectrum of second voice signal Sig2 in the voice activity described above. In FIG. 4, the vertical axis represents the amplitude value of second voice signal Sig2, and the horizontal axis represents the frequency of second voice signal Sig2. In FIG. 4, solid line L1 represents the spectral envelope, and the dash-dotted line represents the tendency of the spectral envelope.

In the second determination operation, clarity determiner 122 calculates the kurtosis of the spectral envelope in each of first frequency band B1, second frequency band B2, and third frequency band B3 in a voice activity. Clarity determiner 122 compares each calculated kurtosis to a threshold. In the second determination operation, clarity determiner 122 then determines that second voice signal Sig2 is clear when the kurtosis is higher than the threshold in each of frequency bands B1, B2, and B3. Clarity determiner 122 determines that second voice signal Sig2 is unclear when the kurtosis is lower than the threshold in at least one of the frequency bands.

First frequency band B1 corresponds to the first formant of a vowel in a human voice. Second frequency band B2 corresponds to the second formant of the vowel in the human voice. Third frequency band B3 corresponds to the formant subsequent to the second formant of the vowel in the human voice.

Here, frequency bands B1 to B3 correspond to the formants of a vowel in the Japanese language. Assume that the determination is made as to whether second voice signal Sig2 is clear in a language, such as English, other than Japanese. Clarity determiner 122 may calculate the kurtosis of the spectral envelope in each of one or more frequency bands corresponding to the formants of a vowel in the language and compare the calculated kurtosis to a threshold.

The kurtosis is an index that represents the sharpness of the probability density function or frequency distribution of a random variable. The higher the kurtosis, the sharper peak and the longer and thicker tails than the normal distribution the distribution has (i.e., the steeper the change around the peak of the spectral envelope). The lower the kurtosis, the rounder peak and the shorter and narrower tails than the normal distribution the distribution has (i.e., the gentler the change around the peak of the spectral envelope).

In the second determination operation, clarity determiner 122 determines that the feature of a vowel in a human voice is significant, that is, the human voice is clear enough to hear the vowel, when the kurtosis is higher than the threshold in each of frequency bands B1 to B3 as described above.

In FIG. 4, (a) and (b) each show that a person utters vowel "o" in a voice activity. In FIG. 4, (a) shows that the spectral envelope is gentle in each of frequency bands B1 to B3, as indicated by solid line L1 and the dash-dotted line. That is, the kurtosis is lower than the threshold in each of frequency bands B1 to B3. Accordingly, in the example in (a) of FIG. 4, clarity determiner 122 determines in the second determination operation that second voice signal Sig2 is unclear.

On the other hand, in FIG. 4, (b) shows that there are a peak of the spectral envelope and a rapid change around the peak in each of frequency bands B1 to B3, as indicated by the solid line and the dash-dotted line. That is, the kurtosis is higher than the threshold in each of frequency bands B1 to B3. Accordingly, in the example in (b) of FIG. 4, clarity determiner 122 determines in the second determination operation that second voice signal Sig2 is clear.

In this manner, processor 12 (i.e., clarity determiner 122) determines whether the second condition is met based on a component corresponding to a vowel at least in second voice signal Sig2.

While clarity determiner 122 executes both the first determination operation and the second determination operation in this embodiment, the determination is not limited thereto. For example, clarity determiner 122 may execute only the second determination operation to determine whether the second condition is met. In view of the influence of ambient noise, such as reverberation, in a space, clarity determiner 122 would be better to execute both the first determination operation and the second determination operation to determine the clarity of second voice signal Sig2 accurately.

### [3. Operation]

Now, an example operation of audio communication device 4 (audio processing system 1), that is, an example audio processing method according to the embodiment will be described with reference to FIG. 5. FIG. 5 is a flowchart showing an example operation of audio processing system 1 according to the embodiment.

First, when second input I/F 11 obtains second voice signal Sig2 (Yes in S101), processor 12 holds obtained second voice signal Sig2 in a buffer. Unless otherwise described, "second voice signal Sig2" corresponds to second voice signal Sig2 held in the buffer. After that, when first input I/F 10 obtains first voice signal Sig1 (Yes in S102), processor 12 calculates and updates the delay time (S103). Specifically, processor 12 calculates the difference between the time when first input I/F 10 has obtained first voice signal Sig1 and the time when second input I/F 11 has obtained second voice signal Sig2 to calculate the delay time. Processor 12 then updates the original delay time to the calculated delay time. When the calculated delay time is equal to the original delay time, processor 12 does not update the delay time.

Next, processor 12 corrects the time difference between first voice signal Sig1 and second voice signal Sig2, based on the delay time, so that first voice signal Sig1 and second voice signal Sig2 start at the same time (S104).

Then, processor 12 calculates parameters necessary for determining the clarity of second voice signal Sig2, based on second voice signal Sig2 (S105). Now, step S105 will be described in detail with reference to FIG. 6.

FIG. 6 is a flowchart showing example calculation of the parameters necessary for determining the clarity of second voice signal Sig2. First, processor 12 detects the voice activity in second voice signal Sig2 (S201). For example, processor 12 detects the voice activity with the point after a certain time from the start of second voice signal Sig2 regarded as the starting point. The voice activity lasts for a tenth second, for example.

After that, processor 12 calculates the spectral contrast in the detected voice activity (S202). Processor 12 then calculates the SNR in the voice band of second voice signal Sig2 based on the calculated spectral contrast (S203).

In parallel with, before, or after steps S202 and S203, processor 12 calculates the feature of second voice signal Sig2 in the detected voice activity (S204). Here, processor 12 calculates the fundamental frequency of second voice signal Sig2 and the spectral envelope of second voice signal Sig2, as the feature of second voice signal Sig2. Processor 12 stores then the calculated feature of second voice signal Sig2 in memory 13 (S205).

Next, processor 12 calculates the kurtosis of the spectral envelope of second voice signal Sig2 in the detected voice activity (S206). Specifically, processor 12 calculates the kurtosis of the spectral envelope in each of first frequency band B1, second frequency band B2, and third frequency band B3 in the detected voice activity.

Referring back to FIG. 5, processor 12 determines the clarity of second voice signal Sig2 (S106). Specifically, processor 12 executes the first determination operation of comparing the SNR in the voice band of second voice signal Sig2 in the detected voice activity to a threshold. Processor 12 also executes the second determination operation of comparing the kurtosis of the spectral envelope in each of frequency bands B1 to B3 in the detected voice activity to a threshold. Processor 12 determines that second voice signal Sig2 is clear, that is, the second condition is met, when determining that the signal is clear in both the first determination operation and the second determination operation. On the other hand, processor 12 determines that second voice signal Sig2 is unclear, that is, the second condition is not met, when determining that the signal is unclear in at least one of the first determination operation or the second determination operation.

When determining that second voice signal Sig2 is clear, that is, the second condition is met (Yes in S106), processor 12 then calculates parameters necessary for determining the utterance identity based on first voice signal Sig1 and second voice signal Sig2 (S107). Now, step S107 will be described in detail with reference to FIG. 7.

FIG. 7 is a flowchart showing example calculation of the parameters necessary for determining the utterance identity. First, processor 12 detects the voice activity of first voice signal Sig1 (S301). For example, processor 12 detects the voice activity with the point after a certain time from the start of first voice signal Sig1 regarded as the starting point. The voice activity to be detected is the same as the voice activity in second voice signal Sig2.

Next, processor 12 reads the feature of second voice signal Sig2 stored in memory 13 (S302). In parallel with, before, or after step S302, processor 12 calculates the feature of first voice signal Sig1 in the detected voice activity (S303). Here, processor 12 calculates the fundamental frequency of first voice signal Sig1 and the spectral envelope of first voice signal Sig1, as the feature of first voice signal Sig1.

Referring back to FIG. 5, processor 12 determines the utterance identity (S108). Specifically, processor 12 determines that the speakers are the same, that is, the first condition is met, when the following conditions are met. (i) First voice signal Sig1 and second voice signal Sig2 have the same fundamental frequency. (ii) The vowel in first voice signal Sig1 and the vowel in second voice signal Sig2 appear at the same time. On the other hand, processor 12 determines that the speakers are not the same, that is, the first condition is not met, when at least one of (i) or (ii) described above is not met. Here, processor 12 determines that the two targets are the same, when the difference between the two is lower than or equal to a threshold.

When the speakers are determined to be the same, that is, the first condition is determined to be met (Yes in S108), both the first condition and the second condition are met. Accordingly, processor 12 determines that the current state is the first state, and lowers the volume of a voice (i.e., an online voice) based on first voice signal Sig1 output from loudspeaker 3 (S109). In addition, processor 12 turns off the noise cancelling function (S110) and turns on the external sound intake function (S111). Note that the order of executing steps S109 to S111 is not limited thereto.

On the other hand, assume that at least one of the first condition or the second condition is not met, that is, second voice signal Sig2 is determined to be unclear (No in S106), or the speakers are determined not to be the same (No in S108). In this case, processor 12 determines that the current state is the second state. Processor 12 then sets the volume of the online voice to be the default volume (S112). In addition, processor 12 turns on the noise cancelling function (S113) and turns off the external sound intake function (S114). Note that the order of executing steps S112 to S114 is not limited thereto.

Step S112 to S114 are executed, even when second input I/F 11 does not obtain second voice signal Sig2 (No in S101), or first input I/F 10 does not obtain first voice signal Sig1 (No in S102).

Until the communication ends (No in S115), processor 12 repeats the series of processing. On the other hand, when the communication ends (Yes in S115), processor 12 ends the operation.

FIG. 8 illustrates an outline of the example operation of audio processing system 1 according to the embodiment. FIG. 8 shows a series of the operation of audio communication device 4 (i.e., audio processing system 1) worn by user U1, when there are two users U1 and U2 at the same point.

As shown in (a) of FIG. 8, when other user U2 utters voice V2, microphone 2 converts the voice into second voice signal Sig2 which is obtained by second input I/F 11. Processor 12 then detects the voice activity, and calculates the fundamental frequency and spectral envelope (MFCC) of second voice signal Sig2, which correspond to the feature of second voice signal Sig2, in the detected voice activity. In addition, processor 12 stores the calculated fundamental frequency and MFCC of second voice signal Sig2 in memory 13. Voice V2 uttered by other user U2 is as first voice signal Sig1 transmitted to conference system 100.

Next, as shown in (b) of FIG. 8, processor 12 calculates the SNR and the kurtosis of the spectral envelope in the voice band of second voice signal Sig2 in the detected voice activity. Processor 12 then determines whether second voice signal Sig2 is clear, that is, whether the second condition is met, using the calculated SNR and kurtosis of the spectral envelope in the voice band of second voice signal Sig2.

As shown in (c) of FIG. 8, assume that first input I/F 10 obtains first voice signal Sig1 transmitted from conference system 100. In this case, processor 12 detects the voice activity of first voice signal Sig1, and calculates the fundamental frequency and spectral envelope (MFCC) of first voice signal Sig1, which correspond to the feature of first voice signal Sig1, in the detected voice activity. Processor 12 then reads the fundamental frequency and MFCC of second voice signal Sig2 from memory 13 and compares these to the fundamental frequency and MFCC of first voice signal Sig1 to determine whether the speakers are the same, that is, whether the first condition is met.

Assume that both the first condition and the second condition are met, that is, the current state is determined to be the first state. In this case, as shown in (d) of FIG. 8, processor 12 lowers the volume of the online voice (i.e., the voice based on first voice signal Sig1), which is output from loudspeaker 3, or does not play the online voice from loudspeaker 3. In addition, processor 12 turns off the noise cancelling function and turns on the external sound intake function. Accordingly, user U1 can mainly hear the direct and clear voice from other user U2 almost without hearing voice V2 uttered by other user U2 via conference system 100.

On the other hand, assume that at least one of the first condition or the second condition is not met, that is, the current states is determined to be the second state. In this case, as shown in (e) of FIG. 8, processor 12 causes loudspeaker 3 to output the online voice (i.e., the voice based on first voice signal Sig). In addition, processor 12 turns on the noise cancelling function and turns off the external sound intake function. Accordingly, user U1 can mainly hear voice V2 uttered by other user U2 via conference system 100 almost without hearing the direct and unclear voice from other user U2.

### [4. Advantages]

Now, advantages of audio processing system 1 according to the embodiment will be described with reference to FIG. 9. FIG. 9 illustrates the advantages of audio processing system 1 according to the embodiment. FIG. 9 shows that two users U1 and U2 at first point A1, user U3 at second point A2, and user U4 at third point A3 have an online conference using conference system 100.

In FIG. 9, (a) shows that two users U1 and U2 are relatively close to each other at first point A1 and user U1 hears voice V2 of other user U2 saying "Hello!" clearly and directly. In such a state, audio communication device 4 (i.e., audio processing system 1) worn by user U1 determines that both the first condition and the second condition are met, that is, the current state is the first state. Audio communication device 4 then causes output voice signal Sig3 to include a signal obtained by reducing a component corresponding to first voice signal Sig1. Here, audio processing system 1 does not cause output voice signal Sig3 to include first voice signal Sig1, that is, does not play a voice based on first voice signal Sig1 from loudspeaker 3.

Accordingly, user U1 can directly hear clear voice V2 of other user U2 saying "Hello!" but does not hear other voice V1 uttered by user U2 and transmitted via conference system 100. That is, with respect to the voice uttered by other user U2, user U1 does not hear both the direct voice from other user U2 and the voice via conference system 100 (i.e., the communication line) and can hear the voice uttered by other user U2 clearly. Accordingly, even when there are a plurality of users at the same point, audio processing system 1 is advantageous in impairing less comfort of conversation.

In this embodiment, the current state is determined to be the first state, audio processing system 1 turns on the external sound intake function, that is, causes output voice signal Sig3 to include second voice signal Sig2. By taking in the sound around user U1, audio processing system 1 is advantageous in that the user can hear the direct voice from other user U2 more clearly.

In FIG. 9, (b) shows that two users U1 and U2 are apart from each other at first point A1 and user U1 does not hear voice V2 of other user U2 saying "Hello!" clearly and directly. In such a state, audio communication device 4 (i.e., audio processing system 1) worn by user U1 determines that at least the second condition is not met, that is, the current state is the second state. Audio communication device 4 then causes output voice signal Sig3 to include first voice signal Sig1 but not to include second voice signal Sig2.

Accordingly, user U1 can hear voice V1 of other user U2 saying "Hello!" and transmitted via conference system 100 but barely hears direct and unclear voice V2 from other user U2. That is, with respect to the voice uttered by other user U2, user U1 does not hear both the direct voice from other user U2 and the voice via conference system 100 (i.e., the communication line) and can hear the voice uttered by other user U2 clearly. Accordingly, even when there are a plurality of users at the same point, audio processing system 1 is advantageous in impairing less comfort of conversation.

In this embodiment, when determining that the current state is the second state, audio processing system 1 turns on the noise cancelling function, that is, causes output voice signal Sig3 to include a voice signal in an opposite phase to second voice signal Sig2. Accordingly, audio processing system 1 is advantageous in that user U1 can hear the voice of other user U2 via conference system 100 (i.e., the communication line) more clearly, by removing the noise around user U1 including the direct voice from other user U2.

When a plurality of users (users U1 to U4 here) utter the respective voices at the same time, audio processing system 1 determines that neither the first condition nor the second condition is met, that is, the current state is the second state. In this case, loudspeaker 3 outputs the voices from other users U2 to U4 via conference system 100. In such a case, the conversation among users U1 to U4 stops temporarily and thus the advantages of audio processing system 1 are not impaired. User U1 using audio processing system 1 only needs to have the advantages described above in the state where at least one of users U1 to U4 utters the voice in turn.

### [5. Other Embodiments]

While the embodiment has been described above, the present disclosure is not limited to the embodiment described above.

In the embodiment described above, processor 12 may include neither external sound intake switch 128 nor ANC controller 129. In this case, audio processing system 1 may execute none of step S110, S111, S113, and S114 in the flowchart shown in FIG. 5. More specifically, if audio communication device 4 is an open-type audio communication device, processor 12 may include both or none of external sound intake switch 128 and ANC controller 129. If audio communication device 4 is an open-type audio communication device as well, processor 12 may include ANC controller 129. In this case, audio processing system 1 may execute neither step S111 nor S114 in the flowchart shown in FIG. 5. If audio communication device 4 is a closed-type audio communication device, processor 12 would be better to include external sound intake switch 128. For example, if some leaking external sound is heard, no external sound intake switch 128 may be included. If audio communication device 4 is a closed-type audio communication device, processor 12 would be better to include ANC controller 129. If external sound is reduced to some extent by closing the earholes of the user, no ANC controller 129 may be included.

In the embodiment described above, where the clarity feature is likely to change, for example, the user joining a VR conference moves indoors or the indoor environmental noise changes, output sound controller 127, external sound intake switch 128, and ANC controller 129 are always controlled. These are however not necessarily controlled for a certain period of time. More specifically, audio processing system 1 does not necessarily execute steps S112 to S114 or S109 to S111 in the flowchart shown in FIG. 5 for a certain period of time (e.g., milliseconds). In this case, each of output sound controller 127, external sound intake switch 128, and ANC controller 129 is controlled for a certain period of time not to be controlled with high frequency. Note that output sound controller 127, external sound intake switch 128, and ANC controller 129 are not necessarily controlled at the same time.

In the embodiment described above, audio processing system 1 is the single device (i.e., audio communication device 4) but may include a plurality of devices. If audio processing system 1 includes a plurality of devices, the functional elements of audio processing system 1 may be divided into the plurality of devices in any manner. For example, audio processing system 1 may be a server including first input I/F 10, second input I/F 11, and processor 12. In this case, audio processing system 1 can cause microphone 2 to obtain second voice signal Sig2 or loudspeaker 3 to output a voice based on output voice signal Sig3, by communicating with instrument including microphone 2 and loudspeaker 3.

How the devices communicate with each other in the embodiment described above is not particularly limited. If two devices communicate with each other in the embodiment described above, a relay device (not shown) may be interposed between the two devices.

The order of the processing in the embodiment described above is an example. The plurality of processing may be executed in another order or may be executed in parallel. The processing executed by a certain processor may be executed by another processor. Part of the digital signal processing described above in the embodiment may be achieved by analog signal processing.

In the embodiment described above, the elements may be achieved by executing software programs suitable for the elements. The elements may be achieved by a program executor, such as the CPU or a processor, reading and executing software programs stored in a recording medium, such as the hard disk or a semiconductor memory.

The elements may be achieved by hardware. For example, the elements may be circuits (or an integrated circuit). These circuit may form a circuit as a whole or may be independent circuits. These circuits may be general-purpose circuits or dedicated circuits.

The general and specific aspects of the present disclosure may be implemented using a system, a device, an integrated circuit, a computer program, or a computer-readable recording medium, such as a CD-ROM, or any combination of systems, devices, integrated circuits, computer programs, or recording media. For example, the present disclosure may be executed as an audio processing method by a computer or as a program for causing a computer to execute such an audio processing method. The present disclosure may be implemented as a non-transitory computer-readable recording medium recording such a program. Note that the program here includes an application program for causing a general-purpose information terminal to function as audio processing system according to the embodiment described above.

The present disclosure may include forms obtained by various modifications to the foregoing embodiment that can be conceived by those skilled in the art or forms achieved by freely combining the elements and functions in the foregoing embodiment without departing from the scope and spirit of the present disclosure.

### (Outline)

As described above, audio processing system 1 according to a first aspect includes first input I/F 10; second input I/F 11; and processor 12. Processor 12 is an example of the signal processing circuit. First input I/F 10 obtains first voice signal Sig1 via a communication line. Second input I/F 11 obtains second voice signal Sig2 based on a voice collected by microphone 2. Processor 12 outputs output voice signal Sig3, based on first voice signal Sig1 and second voice signal Sig2 to loudspeaker 3. Processor 12 causes output voice signal Sig3 to include a signal obtained by reducing a component corresponding to first voice signal Sig1, when both a first condition and a second condition are met. The first condition is that both first voice signal Sig1 and second voice signal Sig2 include a voice signal based on a voice uttered by the same person. The second condition is that second voice signal Sig2 is clear.

Accordingly, when there are a plurality of users at the same point, the user mainly hears the direct voice from another user, which is clearer than the voice via the communication line. The user can thus hear the voice uttered by the other user clearly. That is, it is advantageous in impairing less comfort of conversation, even when there are a plurality of users at the same point.

Audio processing system 1 according to a second aspect is an embodiment of the first aspect. Processor 12 causes output voice signal Sig3 to include first voice signal Sig1 and not to include second voice signal Sig2, when at least one of the first condition or the second condition is not met.

Accordingly, when there are a plurality of users at the same point, the user mainly hears the voice via the communication line, which is clearer than the direct voice from another user. The user can thus hear the voice uttered by the other user clearly. That is, it is advantageous in impairing less comfort of conversation, even when there are a plurality of users at the same point.

Audio processing system 1 according to a third aspect is an embodiment of the first or second aspect. Processor 12 determines whether the first condition is met based on a correlation between a component corresponding to a vowel in first voice signal Sig1 and a component corresponding to a vowel in second voice signal Sig2.

This is advantageous in determining whether the voice signal based on the voice uttered by the same person is included, as compared to a method based on the similarity between the waveform of first voice signal Sig1 and the waveform of second voice signal Sig2.

Audio processing system 1 according to a fourth aspect is an embodiment of any one of the first to third aspects. Processor 12 determines whether the second condition is met based on a component corresponding to a vowel in second voice signal Sig2.

The determination is made based on the component corresponding to the vowel, which serves as an index of clearer hearing of a human voice. This is thus advantageous in easily determining whether second voice signal Sig2 is clear.

Audio processing system 1 according to a fifth aspect is an embodiment of any one of the first to fourth aspects. Processor 12 causes output voice signal Sig3 to include second voice signal Sig2, when both the first condition and the second condition are met.

Accordingly, the sound around the user is taken into. It is thus advantageous in that the user can clearly hear the direct voice from another user.

Audio processing system 1 according to a sixth aspect is an embodiment of the second aspect. Processor 12 causes output voice signal Sig3 to further include a voice signal in an opposite phase to second voice signal Sig2, when at least one of the first condition or the second condition is not met.

This removes the noise around the user including the direct voice from another user. It is thus advantageous in that the user can clearly hear a voice from the other user via the communication line.

An audio processing method according to a seventh aspect includes: obtaining first voice signal Sig1 via a communication line (Yes in S102); and obtaining second voice signal Sig2 based on a voice collected by microphone 2 (Yes in S101). The audio processing method further includes: outputting, to loudspeaker 3, output voice signal Sig3 including a signal obtained by reducing a component corresponding to first voice signal Sig1 (S109), when both a first condition and a second condition are met (Yes in S106 and Yes in S108). The first condition is that both first voice signal Sig1 and second voice signal Sig2 include a voice signal based on a voice uttered by the same person. The second condition is that second voice signal Sig2 is clear.

Accordingly, when there are a plurality of users at the same point, a user mainly hears the direct voice from another user, which is clearer than the voice via the communication line. The user can thus hear the voice uttered by the other user clearly. That is, it is advantageous in impairing less comfort of conversation, even when there are a plurality of users at the same point.

A program according to an eighth aspect causes one or more processors to execute the audio processing method according to the seventh aspect.

Accordingly, when there are a plurality of users at the same point, the user mainly hears the direct voice from another user, which is clearer than the voice via the communication line. The user can thus hear the voice uttered by the other user clearly. That is, it is advantageous in impairing less comfort of conversation, even when there are a plurality of users at the same point.

### [Industrial Applicability]

An audio processing system, and so on, according to the present disclosure are applicable to a system, and so on, which processes a sound emitted from a loudspeaker.

### [Reference Signs List]

- 1: audio processing system
- 10: first input I/F
- 11: second input I/F
- 12: processor
- 121: clarity calculator
- 122: clarity determiner
- 123: first feature calculator
- 124: second feature calculator
- 125: utterance identity determiner
- 126: output sound determiner
- 127: output sound controller
- 128: external sound intake switch
- 129: ANC controller
- 13: memory
- 2: microphone
- 3: loudspeaker
- 100: conference system
- Sig1: first voice signal
- Sig2: second voice signal
- Sig3: output voice signal
- V1, V2: voice

## Claims

1. An audio processing system comprising:
a first input interface that obtains a first voice signal via a communication line;
a second input interface that obtains a second voice signal based on a voice collected by a microphone; and
a signal processing circuit that outputs an output voice signal based on the first voice signal and the second voice signal to a loudspeaker, wherein
the signal processing circuit causes the output voice signal to include a signal obtained by reducing a component corresponding to the first voice signal, when both a first condition and a second condition are met, the first condition being that both the first voice signal and the second voice signal include a voice signal based on a voice uttered by the same person, the second condition being that the second voice signal is clear.

2. The audio processing system according to claim 1, wherein
the signal processing circuit causes the output voice signal to include the first voice signal and not to include the second voice signal, when at least one of the first condition or the second condition is not met.

3. The audio processing system according to claim 1 or 2, wherein
the signal processing circuit determines whether the first condition is met based on a correlation between a component corresponding to a vowel in the first voice signal and a component corresponding to a vowel in the second voice signal.

4. The audio processing system according to claim 1 or 2, wherein
the signal processing circuit determines whether the second condition is met based on a component corresponding to a vowel in the second voice signal.

5. The audio processing system according to claim 1 or 2, wherein
the signal processing circuit causes the output voice signal to include the second voice signal, when both the first condition and the second condition are met.

6. The audio processing system according to claim 2, wherein
the signal processing circuit causes the output voice signal to further include a voice signal in an opposite phase to the second voice signal, when at least one of the first condition or the second condition is not met.

7. An audio processing method comprising:
obtaining a first voice signal via a communication line;
obtaining a second voice signal based on a voice collected by a microphone; and
outputting, to a loudspeaker, an output voice signal including a signal obtained by reducing a component corresponding to the first voice signal, when both a first condition and a second condition are met, the first condition being that both the first voice signal and the second voice signal include a voice signal based on a voice uttered by the same person, the second condition being that the second voice signal is clear.

8. A program for causing one or more processors to execute the audio processing method according to claim 7.
